# EUROPÄISCHE PATENTSCHRIFT

(11) **EP 3 615 898 B1**
(45) Veröffentlichungstag und Bekanntmachung des Hinweises auf die Patenterteilung: **04.03.2026**
(21) Anmeldenummer: 18719864.3
(22) Anmeldetag: 24.04.2018
(51) Int. Cl.: G01G 23/01, G01G 11/00, G01G 21/26, G01G 11/04

(54) **KALIBRIERUNG EINER FÖRDER- UND DOSIERVORRICHTUNG**
CALIBRATING A CONVEYOR AND METERING DEVICE
ÉTALONNAGE D'UN DISPOSITIF DE TRANSPORT ET DE DOSAGE

(30) Priorität: 25.04.2017 DE 102017003966
(43) Veröffentlichungstag der Anmeldung: 04.03.2020
(73) Patentinhaber: Qlar Europe GmbH, 64293 Darmstadt (DE)
(72) Erfinder: SCHUETZ, Andreas, 65474 Bischofsheim Hessen (DE)
(86) Internationale Anmeldenummer: PCT/EP2018/060457
(87) Internationale Veröffentlichungsnummer: WO 2018/197478

(56) Entgegenhaltungen:
- AU-B2- 631 695
- GB-A- 1 557 207
- US-A- 3 976 150

## Beschreibung

Die Erfindung betrifft eine Förder- und Dosiervorrichtung gemäß dem Oberbegriff des Patentanspruchs 1. Diese Förder- und Dosiervorrichtungen umfassen unter anderem Gurtförderer in Form von Bandwaagen oder Dosierbandwaagen, die zum kontinuierlichen Wiegen von auf einem Förderband transportierten Schüttgütern vorgesehen sind. Diese Bandwaagen und Dosierbandwaagen weisen ein endloses Förderband auf, das von einem Antrieb in Bewegung versetzt und in Teilbereichen auf Rollen und Tragrollen gelagert ist. Eine Tragrolle wird dabei üblicherweise von einer Wägevorrichtung in Form eines Kraftaufnehmers, einer Wägezelle oder einer sonstigen Lasterfassungsbaugruppe unterstützt, um für einen bekannten Bandabschnitt der Bandlänge ein Bruttogewichtssignal zu liefern, dass das Gewicht des Materials anzeigt. Das der Beladung proportionale Bruttogewichtssignal, das von dem auf dem Förderband liegenden Fördergut erzeugt wird, wird dann in einer Wägeelektronik weiterverarbeitet.

Die Bandbeladung Q und die Geschwindigkeit v werden ständig gemessen und miteinander multipliziert. Das Ergebnis ist die Förderstärke, aus der die Fördermenge ermittelt wird.

Zur Sicherstellung der Funktion der Förder- und Dosiervorrichtung müssen die Wägevorrichtungen in regelmäßigen Abständen tariert und/oder justiert werden.

Diese Notwendigkeit ergibt sich vor allem aus Temperaturschwankungen im Umgebungsbereich der Förder- und Dosiervorrichtung sowie aus dem Verschleiß und der nachlassenden Festigkeit des Förderbandes oder Fördermittels. Auch beim Wechsel des Fördergutes ist eine Justage der Förder- und Dosiervorrichtung üblich.

Beim Tarieren einer Bandwaage wird das Taragewicht des Förderbandes, das auf die Wägevorrichtung wirkt, während eines Bandumlaufs ermittelt und der entsprechende Parameter in der Wägeelektronik gespeichert. Nach dem Tarieren wird dementsprechend der Mittelwert der Bandbeladung über einen Bandumlauf gleich Null gesetzt, so dass bei der Ermittlung der Förderstärke nur die Bandbeladung ohne Gewicht des Förderbandes ermittelt werden kann.

Bei der Justage dagegen können Fehler in der Mechanik des Förderers, bzw. unsichere Daten der Mechanik, z.B. Hebelübersetzung oder Bandneigung erkannt werden. Dazu wird die Waage anhand von Prüfgewichten wie z.B. Handelsgewichte kontrolliert.

Dazu werden beispielsweise mit Hilfe einer Öse, eines Drahtes, einer Stange oder sonstigen Aufhängekonstruktionen die Prüfgewichte an die vorhandene Wägevorrichtung gehängt. Über ein Justageprogramm wird dann das Verhältnis von Sollgewicht und Prüfgewichtsmesswert ermittelt. Bei einer idealen Waage sollte dieses Verhältnis 1,0000 betragen.

Das Anbringen von Prüfgewichten an die Wägevorrichtung gestaltet sich jedoch gerade bei eingehausten Förder- und Dosiervorrichtungen als äußerst aufwändig und zeitintensiv, da die Zugänglichkeit der Wägevorrichtungen durch Anbauteile, wie Getriebemotoren oder Schaltkasten etc. am Rahmen erschwert ist.

Aus der US 2007/0074560 A1 ist ein Halter für ein zylinderförmiges Prüfgewicht bekannt, bei dem das Prüfgewicht unterhalb der Förderrollen des Förderbandes angeordnet ist. Das Prüfgewicht liegt während des regulären Förderbetriebs auf einem Tablett unterhalb der Förderrollen auf und ist aber gleichzeitig an beiden Enden innerhalb von zwei Schlaufen angeordnet, die mit den zu justierenden Wägezellen verbunden sind. Für den Justagevorgang werden die beiden Schlaufen mittels eines dafür angeordneten Aktuators angezogen, so dass das Prüfgewicht angehoben wird, dessen Last auf die Wägezellen wirkt und die Wägezellen und der zugehörige Controller justiert werden können.

Diese Lösung erfordert baulich einen erhöhten Aufwand und ist aufgrund des zusätzlich benötigten Aktuators auch kostenintensiv.

Aus der US 3,976,150 ist eine Bandwaage bekannt, bei der Prüfgewichte in derselben Größe wie das zu erwartende Fördergewicht aufgebracht werden können, um die Signale aus den Wägevorrichtungen entsprechend auswerten zu können. Hierzu ist ein ortsfester Rahmen angeordnet, an welchem die Prüfgewichte gelagert und von dem diese auf einen zweiten Rahmen abgesenkt werden können. Mittels des zweiten Rahmens wird die Last aus den Prüfgewichten in den Tragrahmen des Förderbandes eingeleitet, der wiederum auf den Wägezellen gelagert ist.

Aus der AU 631 695 B2 ist eine Bandwaage mit einem speziell ausgeformten Prüfgewicht bekannt, das an einer, zwei Wägevorrichtungen verbindenden, Strebe eingehängt werden kann. Zur Befestigung des Prüfgewichts muss jedoch unterhalb des Fördergurtes ein Zugang für einen Bediener vorgesehen sein.

Weitere bekannte Lösungen sehen ortsfeste Halter an den Förder- und Dosiervorrichtungen vor, die zur Aufnahme der Prüfgewichte vorgesehen sind. Hier ist beispielsweise aus der GB 1 557 207 A eine Bandwaage mit einer fest installierten Hebelkonstruktion zum Aufbringen von Prüf- oder Kalibriergewichten bekannt. Diese Halter oder Konstruktionen sind jedoch ebenfalls permanent vorhanden und stehen üblicherweise seitlich über den Rahmen heraus bzw. überragen diesen. Durch Verschmutzungen, Berühren oder Windbelastungen kann daher die Erfassung des Gewichtssignals verändert oder gestört werden, was in Folge zu einer Fehlfunktion der Fördereinrichtung führen kann.

Vor diesem Hintergrund stellt sich die Aufgabe, bei Förder- und Dosiervorrichtungen Prüfkräfte von Prüfgewichten auf einfache Art und Weise in die Wägevorrichtungen einzuleiten, um den Justagevorgang so schnell und sicher wie möglich durchführen zu können.

Diese Aufgabe wird durch eine Vorrichtung mit den Merkmalen des Patentanspruchs 1 bzw. des Patentanspruchs 4 gelöst. Weiterhin wird diese Aufgabe durch ein Verfahren gemäß Patentanspruch 6 gelöst. Vorteilhafte Weiterbildungen der Erfindung sind Gegenstand der Unteransprüche und werden nachfolgend näher erläutert.

Die Erfindung umfasst dabei eine Förder- und Dosiervorrichtung mit einem endlosen Förderband, wobei Teilbereiche dieses Förderbands zur Massenermittlung des Förderguts auf Wägevorrichtungen gelagert sind, die mit einer elektronischen Auswertevorrichtung verbunden sind. Die Wägevorrichtungen erzeugen ein der Beladung des Förderbandes proportionales Signal und senden dieses an die Auswerteeinrichtung.

Die Wägevorrichtungen weisen zudem eine Lagerkonsole auf, die zur formschlüssigen Aufnahme eines Anbauteils, einer Haltevorrichtung und/ oder eines Prüfgewichts vorgesehen ist. Die Lagerkonsole dient üblicherweise nur zur Befestigung des Kraftaufnehmers an der Wägevorrichtung bzw. an der Rahmenkonstruktion der Förderund Dosiervorrichtung. Weiterhin dient sie zur Lasteinleitung der Gewichtslasten aus der Wägerolle in den Kraftaufnehmer. Die erfindungsgemäße Lösung sieht nun eine zusätzliche Anschlussgeometrie an der Lagerkonsole für das Anbauteil oder Prüfgewicht vor. Dadurch kann das entsprechende Anbauteil oder Prüfgewicht formschlüssig an der Lagerkonsole befestigt werden. Die erfindungsgemäße Förder - und Dosiervorrichtung weist zudem einen Rahmen oder eine Unterkonstruktion auf, die mit einer Öffnung im Bereich und / oder oberhalb der Lagerkonsolen versehen ist, so dass das Anbauteil oder das Prüfgewicht von außen, vorzugsweise von oben, durch die Öffnung auf die Lagerkonsole aufgesteckt werden kann. Erfindungsgemäß kann das Befestigen des Anbauteils, das Auflegen des Prüfgewichts und die Entnahme bzw. das Abnehmen des Prüfgewichts und des Anbauteils im Förderbetrieb der Förder - und Dosiervorrichtung erfolgen.

Die erfindungsgemäßen Lagerkonsolen haben einen auskragenden Fortsatz. Dieser auskragende Fortsatz der Lagerkonsole weist an seinem der Lagerkonsole abgewandten also dem auskragenden Ende wiederum eine Ausnehmung auf.

Vorteilhafterweise weist die Lagerkonsole der Wägevorrichtung zusätzlich ein Gabellager für einen Wellenzapfen einer Wägerolle auf, auf die das Förderband der Förderund Dosiervorrichtung zumindest in Teilbereichen gelagert ist.

Weiterhin sieht die Erfindung ein Anbauteil für eine Förder- und Dosiervorrichtung vor, wobei dieses Anbauteil einen Auflagerbereich für ein separates Prüfgewicht und einen Anschlussbereich mit einem Zapfen aufweist, der zur formschlüssigen Verbindung mit der Lagerkonsole, dem Fortsatz der Lagerkonsole und/oder der Ausnehmung am Fortsatz der Lagerkonsole vorgesehen ist. Dieses Anbauteil kann im Rahmen bzw. der Unterkonstruktion der Förder- und Dosiervorrichtung an geeigneter und zugänglicher Stelle aufbewahrt werden. Es kann dann, wenn es für die Justage benötigt wird, von außen durch eine Öffnung im Rahmen vorzugsweise von oben auf die Lagerkonsole aufgesteckt werden.

Vorteilhafterweise weist der Zapfen im Anschlussbereich des Anbauteils eine Gabelform, eine Zylinderform oder eine gestufte Zylinderform auf.

Das Anbauteil oder auch Halterung für das oder die Prüfgewichte ermöglicht es somit, eine bekannte Gewichtskraft eines Prüfgewichts oder Prüfkraft in die Wägevorrichtung einzuleiten. Dazu ist das Anbauteil mit einer Anschlussgeometrie versehen, die mit der Geometrie an der Wägevorrichtung korrespondiert, so dass eine formschlüssige Verbindung zwischen Wägevorrichtung und Anbauteil oder Halterung eingegangen wird.

Die Geometrie der beiden Elemente, Wägevorrichtung und Anbauteil, ermöglicht eine direkte Krafteinleitung in die Wägevorrichtung ohne zusätzliche Kraftübertragungselemente wie Federn oder Hebel. Somit besteht auch keine Gefahr der Verfälschung der Wägeergebnisse aufgrund von Reibungs- oder veränderten Hebelverhältnissen.

Die Geometrie der Lagerkonsole und die des Anbauteils sind weiterhin so aufeinander abgestimmt, dass das Anbauteil ohne zu klemmen und ohne zu kippen auf die Lagerkonsole aufgesteckt werden kann.

Der Auflagerbereich des Anbauteils weist eine ebene Auflagerfläche auf, die dazu geeignet ist, Prüfgewichte in Form von Handelsgewichten, oder anderen Bauteilen mit vorab ermitteltem Gewicht, beispielsweise auch Werkzeuge oder ähnliches zu verwenden.

Vorteilhafterweise weist die Förder- und Dosiervorrichtung an ihrem Rahmen eine Halterung oder Aufnahme für das Anbauteil vor, so dass dieses verliersicher und leicht zugänglich im Bereich der Wägevorrichtung aufbewahrt werden kann.

Weiterhin wird mit der Erfindung ein Verfahren zur Justage einer Förder- und Dosiervorrichtung bereitgestellt, bei dem ein bekanntes Prüfgewicht auf eine Wägevorrichtung der Förder- und Dosiervorrichtung aufgebracht wird, um ein durch Aufbringen des Prüfgewichts erzeugtes Gewichtssignal mit einem gespeicherten, dem Prüfgewicht entsprechenden Signal zu vergleichen. Zum Aufbringen des Prüfgewichts wird ein Anbauteil an der Wägevorrichtung formschlüssig befestigt. Hierzu wird ein Zapfen des Anbauteils in die dafür vorgesehene Anschlussgeometrie der Wägevorrichtung eingesetzt.

Das erfindungsgemäße Verfahren sieht außerdem vor, dass das Anbauteil von oben durch eine Öffnung im Rahmen der Förder- und Dosiervorrichtung eingesetzt wird.

Hierzu braucht nur der Zapfen des Anbauteils durch die Öffnung des Rahmens geschoben zu werden. Aufgrund der Anschlussgeometrie von Anbauteil und Wägevorrichtung sind diese Elemente anschließend formschlüssig miteinander verbunden ohne dass das Messergebnis durch Klemmkräfte oder Kraftnebenschluss verfälscht wird.

Weiterhin sieht das Verfahren vor, dass die Öffnung im Rahmen der Förder- und Dosiervorrichtung nach dem Entnehmen des Prüfgewichts und des Anbauteils durch Einsetzen eines Verschlusses vor Eindringen von Schüttgut oder Schmutz geschützt wird.

Die Erfindung wird nachfolgend anhand eines Ausführungsbeispiels näher erläutert. Es zeigen:
- Fig. 1: eine perspektivische Ansicht eines Teils einer erfindungsgemäßen Förderund Dosiervorrichtung in Form einer Dosierbandwaage mit aufgestecktem Anbauteil und Prüfgewicht,
- Fig. 2: eine Seitenansicht auf den Teil der erfindungsgemäßen Förder - und Dosiervorrichtung aus Fig. 1,
- Fig. 3: eine Unteransicht des Teils der erfindungsgemäßen Förder - und Dosiervorrichtung aus Fig. 1,
- Fig. 4: eine Seitenansicht einer Auflagerkonsole der Wägevorrichtung mit aufgestecktem Anbauteil,
- Fig. 5: eine Unteransicht der Auflagerkonsole der Wägevorrichtung mit aufgestecktem Anbauteil aus Fig.4,
- Fig. 6: eine perspektivische Ansicht eines Teils eines Förderbandes, das auf Tragrollen und einer Messrolle aufliegt,
- Fig. 7: ein Detail aus Fig. 6 mit der Auflagersituation der Messrolle auf einer Wägevorrichtung,
- Fig. 8: eine Wägevorrichtung in perspektivischer Darstellung.

Die Figuren sind schematischer Natur und dienen ausschließlich dem Verständnis der Erfindung. Die gleichen Elemente sind mit denselben Bezugszeichen versehen.

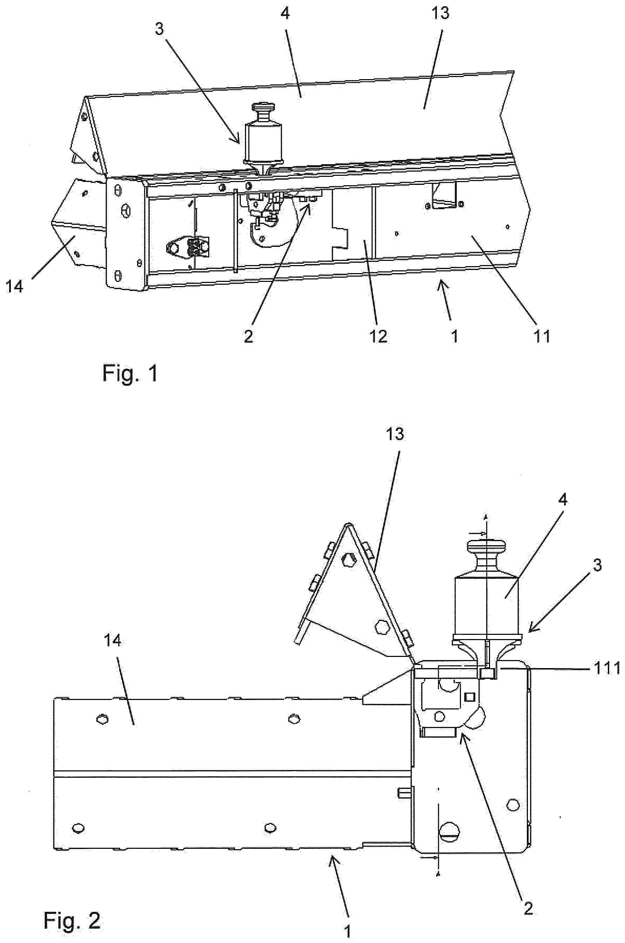

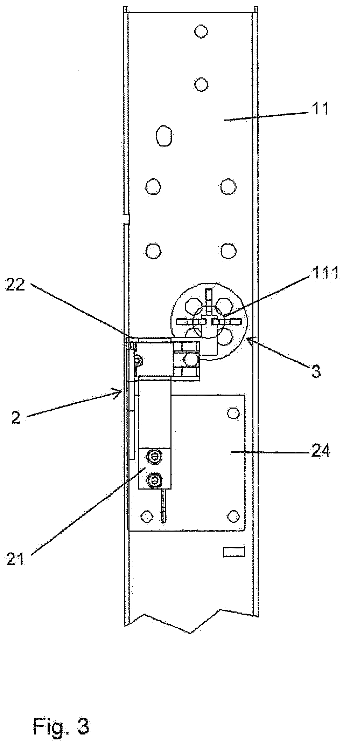

Fig. 1, Fig. 2 und Fig. 3 zeigen einen Teil einer Dosierbandwaage mit einer Unterkonstruktion 1 aus Stahlblech auf der ein endloses Förderband (nicht dargestellt) angeordnet ist, das um eine Antriebs- und Umlenkrolle (ebenfalls nicht dargestellt) läuft.

Das Förderband, auf dem im Betrieb Schüttgut aufliegt, wird üblicherweise zwischen zwei Materialführungsleisten 13 bewegt. An einer Rahmenkonsole 11, die durch Bleche 12 und Querstreben 14 ausgesteift ist, ist eine Wägevorrichtung 2 befestigt. Erfindungsgemäß ist an der Wägevorrichtung 2 ein Anbauteil 3 befestigt, das formschlüssig mit dieser verbunden ist. Das Anbauteil 3 weist eine ebene Auflagerfläche 31 auf, auf die ein Prüfgewicht 4 lose aufgestellt werden kann.

Die Wägevorrichtung 2, die auch Kompaktwägeteil genannt wird, ist mittels einer Montageplatte 24 an der Rahmenkonsole 11 befestigt. Ein Kraftaufnehmer 21 ist wiederum mit der Montageplatte 24 verklebt. Eine Lagerkonsole 22 umschließt wiederum formschlüssig den Kraftaufnehmer 21, so dass dieser dort gabelgelagert ist.

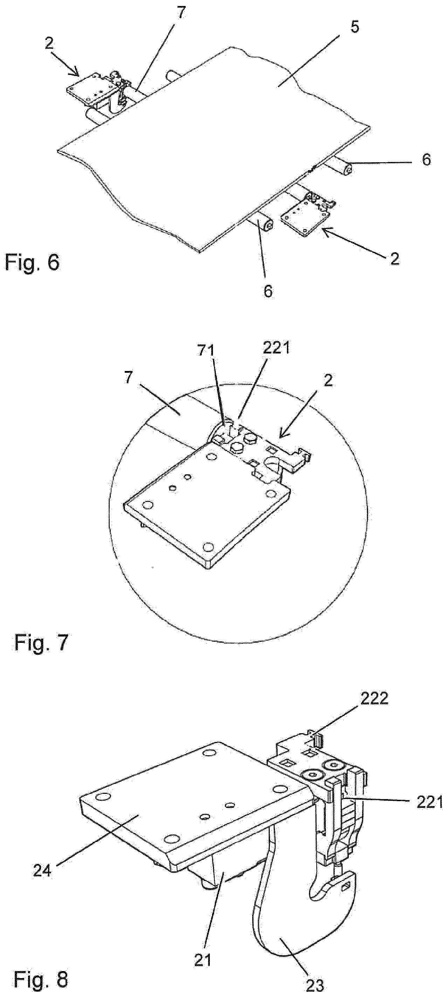

Fig. 6 zeigt einen Teil eines Förderbandes 5, der die sogenannte Wägebrücke bildet. Das endlose Förderband 5 liegt in diesem Bereich auf zwei Tragrollen 6 und auf einer Messrolle 7 auf. Wie aus Fig. 7 ersichtlich wird, liegt die Messrolle 7 wiederum mit ihren zwei Achszapfen 71 in den dafür vorgesehen Ausnehmungen 221 der Lagerkonsole 22 der Wägevorrichtung 2 auf. Somit wird im Betrieb der Förder- und Dosiervorrichtung der Bereich des Förderbandes 5, der sich auf die Messrolle 7 abstützt, samt Fördergut von den Wägevorrichtungen 2 erfasst und verwogen. Die Ausnehmung 221 an der Lagerkonsole 22 bildet dabei die Messlasteinleitungsstelle.

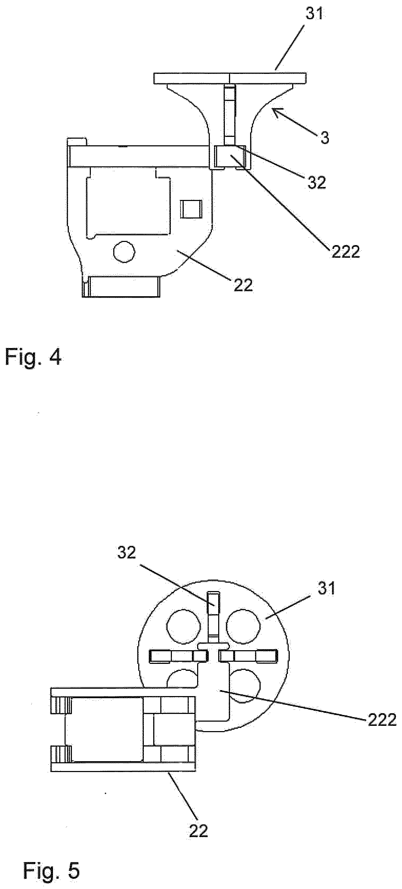

Erfindungsgemäß ist die Lagerkonsole 22, wie aus Fig. 5 und 8 ersichtlich wird, zusätzlich mit einem auskragenden Fortsatz 222 versehen, der die Befestigung des Anbauteils 3 an der Wägevorrichtung 2 ermöglicht. Vorteilhafterweise kann dieser beim Ausschneiden der Blechkomponenten der Lagerkonsole 22 kostengünstig, beispielsweise in einer Laserschneidanlage hergestellt werden.

Besonders vorteilhaft ist dabei die Gabelgeometrie des Zapfens 32 des Anbauteils 3, da durch diese das Anbauteil 3 kippsicher auf der Lagerkonsole 22 oder dem Fortsatz 222 der Lagerkonsole gehalten ist.

Bestehende Förder- und Dosiervorrichtungen können ebenfalls nachträglich mit erfindungsgemäßen Wägevorrichtungen 2 umgerüstet werden. Dazu müssen im Rahmen oder der Unterkonstruktion 1 der Förder - und Dosiervorrichtung nur nachträglich Öffnungen 111 zum Hindurchführen der Anbauteile 3 oder Prüfgewichte 4 hergestellt werden. Der damit verbundene Aufwand wird aber durch die Zeitersparnis bei nachfolgenden Justagevorgängen bei weitem gerechtfertigt.

### Bezugszeichenliste

- 1: Unterkonstruktion
11 Rahmenkonsole
12 Aussteifungsblech
13 Materialführungsleiste
14 Querstrebe
- 2: Wägevorrichtung, Kompaktwägeteil
21 Kraftaufnehmer, Wägebalken
22 Lagerkonsole
221 Ausnehmung
222 Fortsatz
23 Überlastsicherung
24 Montageplatte
- 3: Anbauteil
31 Auflagerfläche
32 Gabelgeometrie
- 4: Prüfgewicht
- 5: Förderband
- 6: Tragrolle
- 7: Messrolle
71 Achszapfen der Messrolle

## Patentansprüche

1. Förder- und Dosiervorrichtung mit
- einem endlosen Förderband (5) oder Fördergurt, wobei Teilbereiche dieses Förderbands (5) oder Fördergurts zur Massenermittlung des Förderguts auf Wägevorrichtungen (2) gelagert sind, die mit einer elektronischen Auswertevorrichtung verbunden sind,
**dadurch gekennzeichnet, dass** jede Wägevorrichtung (2)
- je einen Kraftaufnehmer (21) und eine Lagerkonsole (22) aufweist,
- wobei die Lagerkonsole (22)
- - eine Ausnehmung (221), die eine Messlasteinleitungsstelle zur Lasteinleitung der Gewichtslasten aus einer Messrolle (7) in den Kraftaufnehmer (21) bildet und
- - einen auskragenden Fortsatz (222) aufweist, der zur formschlüssigen Aufnahme, Befestigung und Entnahme eines Anbauteils (3) oder eines Prüfgewichts von außen, vorzugsweise von oben, durch eine Öffnung im Rahmen oder der Unterkonstruktion der Förder- und Dosiervorrichtung im Förderbetrieb vorgesehen ist, derart, dass eine Prüfkraft in die Wägevorrichtung (2) eingeleitet wird.

2. Förder- und Dosiervorrichtung gemäß Anspruch 1, **dadurch gekennzeichnet, dass** der auskragende Fortsatz (222) der Lagerkonsole (22) an seinem auskragenden Ende eine Ausnehmung aufweist.

3. Förder- und Dosiervorrichtung gemäß einem der vorhergehenden Ansprüche, **dadurch gekennzeichnet, dass** die Lagerkonsole (22) der Wägevorrichtung (2) zusätzlich ein Gabellager (221) für einen Wellenzapfen (71) einer Messrolle (7) aufweist, auf die das Förderband (5) der Förder- und Dosiervorrichtung zumindest in Teilbereichen gelagert ist.

4. Anbauteil (3) für eine Förder- und Dosiervorrichtung gemäß einem der vorhergehenden Ansprüche, **dadurch gekennzeichnet, dass** dieses einen Auflagerbereich (31) für ein Prüfgewicht (4) und einen Anschlussbereich (32) mit einem Zapfen aufweist, der zur formschlüssigen Verbindung mit der Lagerkonsole (22), dem Fortsatz (222) der Lagerkonsole (22) oder der Ausnehmung am Fortsatz (222) der Lagerkonsole (22) vorgesehen ist.

5. Anbauteil (3) für eine Förder- und Dosiervorrichtung gemäß Patentanspruch 4, **dadurch gekennzeichnet, dass** der Zapfen im Anschlussbereich (32) eine Gabelform, eine Zylinderform oder eine gestufte Zylinderform aufweist.

6. Verfahren zur Justage einer Förder- und Dosiervorrichtung gemäß einem der Ansprüche 1 bis 3 ,
- bei dem ein Prüfgewicht (4) auf eine Wägevorrichtung (2) der Förder- und Dosiervorrichtung aufgebracht wird, um ein Gewichtssignal, das durch Aufbringen des Prüfgewichts (4) erzeugt wird, mit einem gespeicherten dem Prüfgewicht entsprechenden Signal zu vergleichen, **dadurch gekennzeichnet, dass** ein Anbauteil (3) oder das Prüfgewicht (4) an der Lagerkonsole (22) der Wägevorrichtung (2) formschlüssig befestigt wird, indem ein Zapfen des Anbauteils (3) oder des Prüfgewichts (4) im Förderbetrieb von außen, vorzugsweise von oben, durch eine Öffnung im Rahmen der Förder- und Dosiervorrichtung in die dafür vorgesehene Anschlussgeometrie der Lagerkonsole (22) eingesetzt wird, derart dass die Prüfkraft in die Wägevorrichtung (2) eingeleitet wird.

7. Verfahren gemäß Anspruch 6, **dadurch gekennzeichnet, dass** das Prüfgewicht (4) eine beliebige Geometrie aufweisen kann und auf eine Auflagefläche (31) des Anbauteils (3) aufgelegt wird.

8. Verfahren gemäß einem der Ansprüche 6 oder 7, **dadurch gekennzeichnet, dass** die Öffnung (111) des Rahmens nach dem Entnehmen der Prüfgewichts (4) und des Anbauteils (3) durch Einsetzen eines Verschlusses vor Eindringen von Schüttgut oder Schmutz geschützt wird.

## Claims

1. Conveying and metering device comprising
- an endless conveyor belt (5) or conveyor belt, wherein partial regions of this conveyor belt (5) or conveyor belt are placed on weighing devices (2) for determining the mass of the conveyed material, which are connected to an electronic evaluation device,
**characterized in that** each weighing device (2)
- comprises a force transducer (21) and a bearing console (22),
- wherein the bearing console (22)
- - comprises a recess (221), which forms a measuring load introduction point for the load introduction of the weight loads from a measuring roller (7) into the force transducer (21), and
- - comprises a projecting extension (222), which is provided for the positive-fit reception, positive-fit fastening, and positive-fit removal of an attachment part (3) or a test weight from outside, preferably from above, through an opening in the frame or the substructure of the conveying and metering device during conveying operation, such that a test force is introduced into the weighing device (2).

2. Conveying and metering device according to claim 1, **characterized in that** the projecting extension (222) of the bearing console (22) comprises a recess at its projecting end.

3. Conveying and metering device according to one of the preceding claims, **characterized in that** the bearing console (22) of the weighing device (2) additionally comprises a fork bearing (221) for a shaft journal (71) of a measuring roller (7), on which the conveyor belt (5) of the conveying and metering device is placed at least in partial regions.

4. Attachment part (3) for a conveying and metering device according to one of the preceding claims, **characterized in that** it comprises a bearing region (31) for a test weight (4) and a connection region (32) with a pin, which is provided for the positive-fit connection with the bearing console (22), the extension (222) of the bearing console (22), or the recess at the extension (222) of the bearing console (22).

5. Attachment part (3) for a conveying and metering device according to claim 4, **characterized in that** the pin in the connection region (32) comprises a fork shape, a cylinder shape, or a stepped cylinder shape.

6. Method for adjustment of a conveying and metering device according to one of claims 1 to 3,
- wherein a test weight (4) is applied to a weighing device (2) of the conveying and metering device in order to compare a weight signal, which is generated by application of the test weight (4), with a stored signal corresponding to the test weight, **characterized in that** an attachment part (3) or the test weight (4) is positively fastened to the bearing console (22) of the weighing device (2), by inserting a pin of the attachment part (3) or of the test weight (4) during conveying operation from outside, preferably from above, through an opening in the frame of the conveying and metering device into the corresponding connection geometry of the bearing console (22), such that the test force is introduced into the weighing device (2).

7. Method according to claim 6, **characterized in that** the test weight (4) can comprise any geometry and is placed on a bearing surface (31) of the attachment part (3).

8. Method according to one of claims 6 or 7, **characterized in that** the opening (111) of the frame is protected against penetration of bulk material or dirt after removal of the test weight (4) and the attachment part (3) by inserting a closure.

## Revendications

1. Dispositif de convoyage et de dosage comprenant
- une bande de convoyage continue (5) ou une courroie de convoyage, des parties de cette bande de convoyage (5) ou courroie de convoyage étant montées sur des dispositifs de pesage (2) qui sont reliés à un dispositif d'évaluation électronique afin de déterminer la masse du produit convoyé,
**caractérisé en ce que** chaque dispositif de pesage (2)
- présente à la fois un capteur de force (21) et une console de support (22),
- la console de support (22)
-- présentant un évidement (221) qui forme un point d'introduction de charge de mesure pour l'introduction de la charge pondérale d'un rouleau de mesure (7) dans le capteur de force (21) et
-- un prolongement en saillie (222) qui est prévu pour la réception, la fixation et le retrait par complémentarité de forme d'une pièce rapportée (3) ou d'un poids d'essai depuis l'extérieur, de préférence depuis le haut, à travers une ouverture dans le châssis ou la sousconstruction du dispositif de convoyage et de dosage en mode de convoyage, de telle sorte qu'une force d'essai est introduite dans le dispositif de pesage (2).

2. Dispositif de convoyage et de dosage selon la revendication 1, **caractérisé en ce que** le prolongement en saillie (222) de la console de support (22) présente un évidement à son extrémité en saillie.

3. Dispositif de convoyage et de dosage selon l'une des revendications précédentes, **caractérisé en ce que** la console de support (22) du dispositif de pesage (2) présente en outre un palier en fourche (221) pour un tourillon (71) d'un rouleau de mesure (7) sur lequel la bande de convoyage (5) du dispositif de convoyage et de dosage est montée au moins dans certaines zones.

4. Pièce rapportée (3) pour un dispositif de convoyage et de dosage selon l'une des revendications précédentes, **caractérisée en ce qu'**elle présente une zone d'appui (31) pour un poids d'essai (4) et une zone de raccordement (32) avec un tourillon prévu pour une liaison par complémentarité de forme avec la console de support (22), le prolongement (222) de la console de support (22) ou l'évidement sur le prolongement (222) de la console de support (22).

5. Pièce rapportée (3) pour un dispositif de convoyage et de dosage selon la revendication 4, **caractérisée en ce que** le tenon présente, dans la zone de raccordement (32), une forme de fourche, une forme cylindrique ou une forme cylindrique étagée.

6. Procédé d'ajustage d'un dispositif de convoyage et de dosage selon l'une des revendications 1 à 3,
- dans lequel un poids d'essai (4) est appliqué sur un dispositif de pesage (2) du dispositif de convoyage et de dosage afin de comparer un signal de poids généré par l'application du poids d'essai (4) à un signal mémorisé correspondant au poids d'essai, **caractérisé en ce qu'**une pièce rapportée (3) ou le poids d'essai (4) est fixé par complémentarité de forme à la console de support (22) du dispositif de pesage (2) en introduisant un tenon de la pièce rapportée (3) ou du poids d'essai (4) dans le cadre du dispositif de convoyage et de dosage, de préférence par le haut, à travers une ouverture prévue à cet effet dans la géométrie de raccordement de la console de support (22), de telle sorte que la force d'essai soit transmise au dispositif de pesage (2).

7. Procédé selon la revendication 6, **caractérisé en ce que** le poids d'essai (4) peut présenter une géométrie quelconque et est posé sur une zone d'appui (31) de la pièce rapportée (3).

8. Procédé selon l'une des revendications 6 ou 7, **caractérisé en ce que** l'ouverture (111) du cadre est protégée contre la pénétration de matières en vrac ou de saletés après le retrait du poids d'essai (4) et de la pièce rapportée (3) par la mise en place d'un bouchon.
